Europäisches Patentamt

European Patent Office

Office européen des brevets

(11) Publication number: **0 497 039 A1**

# EUROPEAN PATENT APPLICATION

(21) Application number: **91310120.0**

(22) Date of filing: **01.11.91**

(51) Int. Cl.5: **B60Q 1/076**

(30) Priority: **28.01.91 US 646041**

(43) Date of publication of application:
**05.08.92 Bulletin 92/32**

(84) Designated Contracting States:
**DE FR GB**

(71) Applicant: **COOPER INDUSTRIES INC.**
**1001 Fannin Street, Suite 4000**
**Houston Texas 77002(US)**

(72) Inventor: **Corsello, Mark A.**
**42935 Northville Place**
**Apt. No.1509, Northville, Michigan 48167(US)**
Inventor: **Faulhaber, James J.**
**26 Richardsville Rd.**
**Ogdensburg, New Jersey 07439(US)**
Inventor: **Grunder, Robert A.**
**6 Roselle Avenue**
**Cranford, New Jersey 07016(US)**
Inventor: **Pollara, Nicolas J.**
**139 Ball**
**Parsippany, New Jersey 07054(US)**
Inventor: **Rucki,George W.**
**4 Lancer Ter.**
**Randolph New Jersey 07869(US)**

(74) Representative: **MacDougall, Donald**
**Carmichael et al**
**Cruikshank & Fairweather 19 Royal**
**Exchange Square**
**Glasgow G1 3AE, Scotland(GB)**

(54) **Driver-controlled automobile headlamp leveling system.**

(57) A headlamp levelling system (10) includes a mounting assembly (20) in which the headlamp (28) is rotatably mounted. The Position of the headlamp (28) is adjusted, via a flexible cable (30), with a linear actuator (50), the movement of which is controlled by a switch (70) located in close proximity to the driver.

FIG.2

EP 0 497 039 A1

The present invention relates to automobile headlamp systems; more particularly, the device and method of the present invention relates to semi-automatic headlamp leveling or aligning systems. In various situations, automobiles are called upon to carry additional loads, be it passengers or cargo. The adding of additional loads changes the angular relationship of the automobile to the ground. For example, if the headlamps of a vehicle are properly aimed when the vehicle is empty, adding cargo to the trunk will cause the aim to rise because the rear end of the vehicle becomes lower. In turn, the headlamps become misaligned. This misalignment of the headlamps may be detrimental to both the driver, as there is less light on the road, and also to oncoming motorists as they are exposed to higher intensities of glare light. Without leveling of the headlamp system, the driver must proceed on his travels with improperly aimed headlamps.

There is therefore a need for a headlamp leveling system which allows the driver to reaim the headlights to correct misalignment caused by vehicle loading. Once the cargo or passenger load has been removed from the vehicle, the headlamps should be returnable to their original position.

The automobile headlamp leveling system of the present invention provides for reaiming headlamps in response to automobile loading. It includes an assembly for rotatably mounting headlamps. The headlamp is moved within the mounting assembly by a flexible cable attached to a linear actuator. The driver controls the movement of the headlamp from his position within the vehicle by actuating a variable position switch which controls the linear actuator.

The zero or null adjustment of the headlamp system may be accomplished by use of a manual adjustment on the linear actuator. By use of the automobile headlamp leveling system of the present invention, the operator of the vehicle may adjust the headlamps for positioning when the vehicle is carrying only a driver, or when the vehicle is fully loaded. Additional positions may be provided between these two end positions to accommodate intermediate loading configurations.

A better understanding of the system of the present invention may be had by reference to the figures wherein:

Figures 1A and 1B are diagrams of the position of automobile headlamps under both normal and fully-loaded conditions;

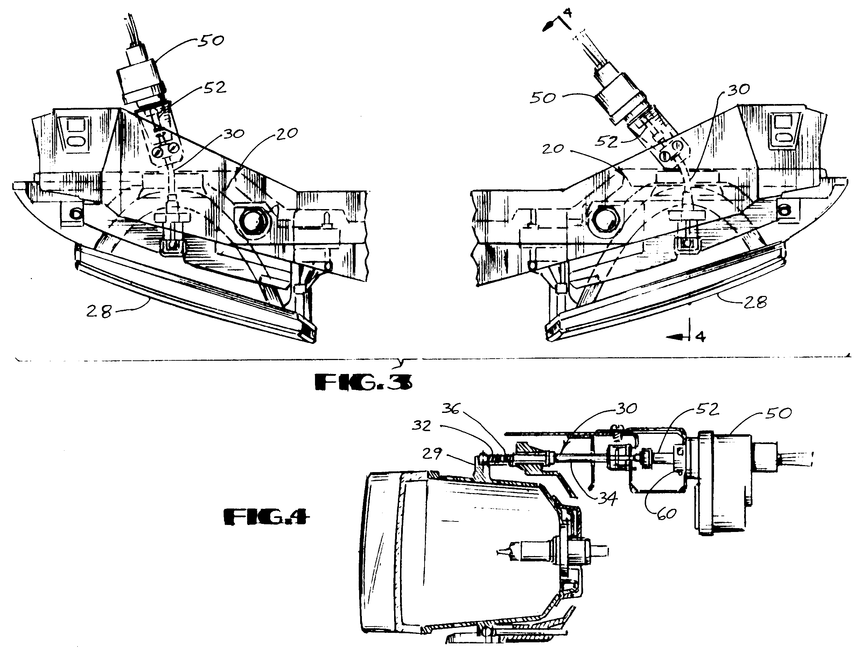

Figure 2 is a schematic diagram of the headlamp leveling system of the present invention;

Figure 3 is a diagrammatic top view representation of the mounting of the headlamp assembly of the present invention in a motor vehicle; and,

Figure 4 is a sectional view taken at line 4.4 in Figure 3.

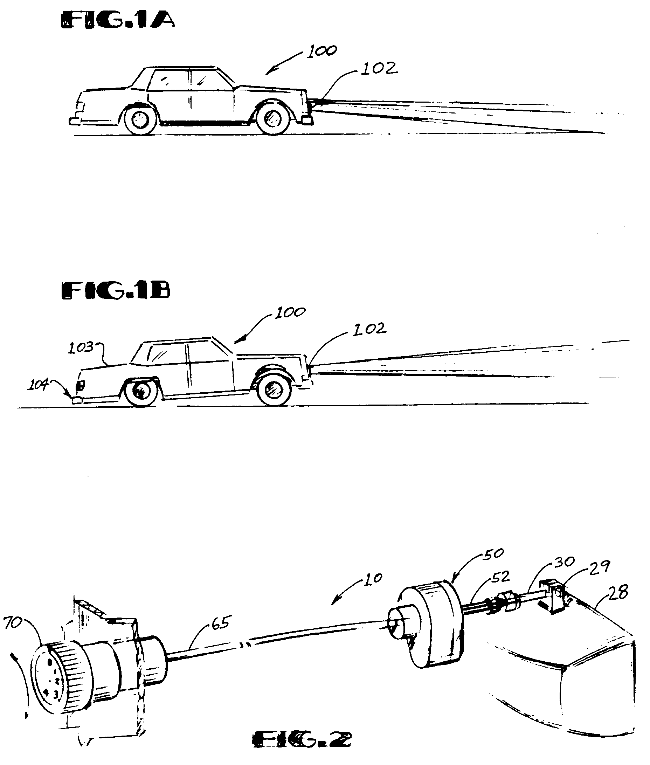

A better understanding of the background necessitating the headlamp leveling system 10 of the present invention may be had by reference to Figures 1A and 1B. In Figure 1A, a vehicle 100 carrying no other load than the driver is illustrated with properly aligned headlamps 102. If the vehicle 100 is fully loaded by luggage or other equipment placed in the trunk 103 or the vehicle includes a number of passengers, the rear end 104 of the vehicle tilts downwardly, thus causing the headlamps 102 to become misaimed or misaligned upwardly. This is shown in Figure 1B. In order to solve this problem, the device of the present invention is mounted in any convenient location in the vehicle wherein a mechanical force may be placed on the headlamp 102 so as to change its position depending on the load condition of the vehicle 100.

In most automobiles on the road today, headlamps are typically supported at various locations within a headlight mounting assembly. Adjustment of headlamp alignment is made by turning adjustment screws when the vehicle is parked.

As may be seen schematically in the drawings, the headlamp leveling system 10 in this example consists of three main elements. The first portion is a mounting assembly or bracket 20 for the headlamp 28 itself. This mounting assembly 20 permits headlamp 28 to be rotated to a position with respect to the automobile. The important point is that headlamp 28 may be positioned with respect to the vehicle so that the aim of the headlamp 28 rises or falls.

The second main element is a linear actuator 50. The linear actuator is an electric, hydraulic or pneumatic motor which provides both a pushing and a pulling force on headlamp 28.

In the preferred embodiment, a flexible cable assembly 30 connects linear actuator 50 to headlamp 28. It will be understood by those of ordinary skill in the art that headlamp mounting assembly 20 may be connected directly to linear actuator 50 so that flexible cable assembly 30 facilitates the positioning of the linear actuator 50 in the automobile.

Movement of linear actuator 50 causes flexible cable 30 to move and thus causes headlamp 28 to move. In the preferred embodiment, flexible cable assembly 30 is the link between linear actuator 50 and headlamp 28. Its purpose is to transfer the movement of shaft portion 52 of linear actuator 50 to headlamp 28.

As may be seen in Figure 4, flexible cable assembly 30 may include an inner cable 32 and an outer sleeve 34 around the inner cable 32. Flexible cable assembly 30 is connected to shaft portion 52 of linear actuator 50 and the vertical adjustment block 29 of headlamp 28. The outer sleeve of flexible cable assembly 30 is connected between linear actuator 50 and the headlamp mounting assembly 20. Outer sleeve 34 defines the path for the inner cable 22. A spring 36 may be placed between headlight mounting assembly 20 and headlamp 28 to assure that headlamp 28 will fall forward to its lowest point of aim if flexible cable assembly 30 should fail.

Controlling linear actuator 50 is adjustment knob 60. Adjustment knob 60 assists in the initial aiming of headlamp 28. By rotating adjustment knob 60, actuator shaft 52 is caused to move outwardly. Rotating knob 60 in the opposite direction causes actuator shaft 52 to retract. It is important to note that rotating adjustment knob 60 is independent of the movement of shaft 52 which is initiated by the driver. Adjustment knob 60 is used to set the zero or null aim of headlamps 28.

In the preferred embodiment, and as shown in Figures 3 and 4, a linear actuator 50 is mounted on each side of the vehicle. It will be understood by those skilled in the art that a single linear actuator 50 may be used. Both linear actuators 50 are directly connected to the driver's headlamp position control switch assembly 70 by wires 65. Linear actuator 50 transforms the electrical signal received from control switch assembly 70 into rotational movement of the headlamp 28. Each movement of linear actuator 50 is determined by a change in the position of control switch 70. For example, when switch 70 is rotated from one position to another, actuator shaft 52 extends a predetermined distance. Returning switch 70 back to its previous position causes actuator shaft 52 to retract the same predetermined distance.

The third major component of the example is multi-position control switch 70 which is located near the driver. Readjustment of the aim of headlamps 28 is initiated by the driver turning the multi-position switch 70. In the preferred embodiment, multi-position switch 70 is capable of being moved to four discrete positions. More positions, less positions or an infinite variety of positions may be obtained by varying the type of multi-position switch 70 employed. To illustrate the device 10 of the present invention, the positions are marked 0, 1, 2, and 3. The 0 position is the initial factory set position and is used when only the driver occupies the vehicle. The 3 position is used when the car is fully loaded with passengers and/or cargo. The 1 and 2 positions are used in situations where the vehicle is neither fully loaded nor fully unloaded.

Operation.

Once a vehicle 100 is loaded with passengers and/or cargo, the driver positions himself behind the steering wheel in order to operate the vehicle. If operation of the vehicle requires use of the headlamp system 102, headlamps 102 are turned on in the customary manner. If the vehicle load consists only of the driver, the multi-position switch is set on the number 0. This is standard setting for headlamp alignment which has been achieved by measuring where the headlamp beam falls and adjusting the position with the adjustment knob on the linear actuator. If the vehicle is fully loaded and is riding low in the rear end, the multi-position switch is moved to the number 3. This causes the shaft in the linear actuator to move, thus changing the position of the headlamp. If the vehicle carries an intermediate load, the driver may select number 1 or 2 positions.

There is thereby provided by the device and system of the present invention an method for adjusting headlamps in response to the load condition of a vehicle.

While the semi-automatic headlamp leveling device and system of the present invention has been described by reference to its preferred embodiment, it will be understood that other various embodiments of the device and method of the present invention may be possible by reference to the specification and the appended claims. Such additional embodiments shall be included within the scope of the appended claims.

**Claims**

1. A driver-controlled automobile headlamp levelling system (10) comprising:
   a headlamp-mounting assembly (20) which permits movement of a headlamp (28) with respect to the headlamp-mounting assembly (20);
   means (50) for moving the headlamp (28) with respect to the headlamp-mounting assembly (20);
   means (70,65) for controlling the means (50) for moving the headlamp, the means (70,65) for controlling the means (50) for moving the headlamp being arranged to be operable by a driver of an automobile on which the headlamp is mounted; characterised in that
   the means for moving the headlamp with respect to the headlamp mounting assembly is a linear actuator (50) and the headlamp (28) is connected to the linear actuator (50) by a flexible cable assembly (30).

2. A system according to claim 1, wherein the linear actuator (50) further includes a manual adjuster (60).

3. A system according to claim 1 or claim 2, wherein the means (70,65) for controlling the means (50) for moving the headlamp is a variable position switch (70).

4. A system according to claim 5, wherein the variable position switch (70) has four positions.

5. A system according to any of claims 1 to 4, wherein the flexible cable is a Bowden-type cable.

## FIG.1A

100
102

## FIG.1B

100
102
103
104

FIG.2

70
65
10
50
52
30
29
28

FIG.3

FIG.4

EP 0 497 039 A1

| | European Patent Office | EUROPEAN SEARCH REPORT | Application Number |
|---|---|---|---|

EP    91 31 0120

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 573 024 ( RONVAUX )<br>* figure 16 *<br>--- | 1,2,5 | B60Q1/076 |
| X | FR-A-2 391 878 (NISSAN MOTOR COMPANY LIMITED)<br>* figures 1,3A,3B *<br>--- | 1,5 | |
| X | GB-A-1 126 087 (GENERAL MOTORS LIMITED)<br>* figure 2 *<br>--- | 1 | |
| A | FR-A-2 455 530 (ROBERT BOSCH GMBH)<br>* figures 1-4 *<br>--- | 3,4 | |
| A,P | EP-A-0 416 998 (ROBERT BOSCH GMBH)<br>* column 6, line 16 - line 25; figure 4 *<br>----- | 1 | |
| | | | TECHNICAL FIELDS SEARCHED (Int. Cl.5 )<br><br>B60Q |

The present search report has been drawn up for all claims

| Place of search | Date of completion of the search | Examiner |
|---|---|---|
| THE HAGUE | 26 MARCH 1992 | Onillon C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)